# EUROPEAN PATENT APPLICATION

(11) **EP 2 784 664 A1**
(43) Date of publication of application: **01.10.2014**
(21) Application number: 13462010.3
(22) Date of filing: 19.12.2013
(51) Int. Cl.: G06F 9/44

(54) **Method system and computer program product for dynamic user interface switching**

(30) Priority: 26.03.2013 HU 1300175
(71) Applicant: Kiss, Laszlo, 1016 Budapest (HU)
(72) Inventor: Kiss, László, H-1016 Budapest (HU)
(74) Representative: Mak, Andras

(57) **Abstract**

User Interfaces of Applications installed and executed on Communications Devices or Mobile Computing Devices may consist of several text, graphics, sound, voice, gesture, etc. elements, and are implemented in software components separate from functional components of the Applications.

The Applications may be distributed and installed to the Communications Devices or Mobile Computing Devices with a default set of User Interfaces. Different users of Communications Devices or Mobile Computing Devices may have different customization or personalization desires or requests for certain Applications they use on their Communications Devices or Mobile Computing Devices.

The desired additional Customized and/or Personalized UI sets may be downloaded or used dynamically from a different device or server anywhere on a private or public server or cloud, and made available for the Application to be set and used. Users have the possibility to anytime choose among the available User Interfaces, and switch from one to other.

As such a large variety of different Default or Customized and/or Personalized User Interface sets can be made available for users. As a result use of any Application will be possible using a User Interface setting best suitable for the User, without affecting a functionality of it.

Users who wish to practice their knowledge of other languages than their mother tongue, may want to set one or several Applications to different languages or customizations they desire to make practice. For this the user is capable to set in the system of the current patent a list of the languages or customizations he/she wishes to make practice in. The selected Application's User Interface will be set to the preferred language to be practiced. The user will have the possibility to configure a timer, a gesture or screen action which will change the actual User Interface of the active Application to the next known language or to the mother tongue.

## Description

### Background of the invention

### 1. Technical Field

The present invention relates in general to Applications installed and running on Communications Devices or Mobile Computing Devices, and in particular to satisfying the need of Users to be able to practice their language skills during the use of Applications. Still more particularly, the present invention relates to the setting of behavior of their Device in order to enable practicing of the language skills through the use of the Applications for the user.

### 2. Description of the Related Art

Communications Devices or Mobile Computing Devices are not only increasingly used worldwide, but also by a large variety of users demanding the possibility of using these devices for different entertainment, social, learning and work purposes. Many users have different knowledge levels in one or more languages, different from their mother tongue, and many of these users are willing to practice their language skills even during the use of their devices.

For this purpose several dedicated language learning applications are available - but all these have the disadvantage that the user has to activate them, and has to dedicate time for the language skill practice. On the other hand, the Users activate much more often and for much longer times their different other applications, usually in their mother tongue, or in a language they know very well, and don't need much practice for.

It would be desirable, therefore, to provide a mechanism and a system for the Users to be able set the language of the User Interfaces of the Applications they use day by day to a language they wish to practice.

As such, the Users will have the possibility to widen their language skill practicing opportunities, anytime by using their Device.

For facilitating the language skill practicing or for changing the User Interface, several different solutions have been suggested.

Patent Application published under the number US2005/0208459 A1 discloses a system, a game, which upon trigger event activation executes progressive learning processes. This system, though also facilitates language skills practicing, relates to one single, dedicated application. Therefore one object of this invention is to make it possible to several, non-dedicated applications to be involved in the language practicing.

US patent no. US 8,219,922 describes a solution for dynamic change of the User Interface. This patent refers to a system, in which the User Interface has to go into configure mode, than the system has the possibility to change, more specifically to extend the User Interface. This document deals only with changing of the visual appearance of a User Interface, and leaves other settings, such as languge unchanged, therefore it is not suitable for developing language skills.

US patent no 4,974,191 describes a system for adaptive natural language computer interface system, which makes it possible to change the User Interface of a computer system from one natural language to an other language. But this system relates more specifically to the automated or computer aided translation of the User Interface itself.

### Glossary

**Communications Device:** a portable, mobile or fixed device which offers the possibility to be used for voice, data or video communications, and additionally to personal, business or entertainment purposes, and which may offer locally stored, downloaded, broadcasted or streamed media content to its user. The Communications Device usually has an Operating System, with a variety of preinstalled features, functions and applications, and offers the possibility for its user or to a third party, to install and run additional applications.

**Mobile Computing Device:** a portable or mobile device which may be used for personal, business or entertainment purposes. The device may offer locally stored, downloaded, broadcasted or streamed media content to its user, and additionally may offer the possibility to be used for voice, data or video communications, The Mobile Computing Device usually has an Operating System, with a variety of preinstalled features, functions and applications, and offers the possibility for its user or to a third party, to install and run additional applications.

**User Interface set (UI set):** User Interface of an application are usually built from various elements of various types (menus, texts, help files, graphical elements, sounds, voice prompts, gestures, etc.). A User Interface set (UI set) is a conglomerate of all the necessary and sufficient elements needed for the unlimited usages of all the functions and features of the application.

**Default UI set:** A UI set provided by the developer or distributor of the application, intended for broad user groups of the application.

**Customized and/or Personalized UI set:** A UI set, which is based on a Default UI set, but one, more, or all the elements were altered. Altering a UI set element may be materialized by changing the language of menus, texts, or changing the tonality or mood of the menus, texts, or changing the voice prompts, sounds, etc. The purpose of customizing and/or personalizing of the UI set is to obtain a new version of it, which makes the usage of the application possible, or more comfortable, or more fashionable (etc.) for the user. Enterprises may provide their employees with Customized UI sets using company standard wordings, sounds, graphics, different user groups may also build their own Customized UI set, and it is even possible for a family or a single person to create a Personalized UI set.

**Active UI set:** An application may be distributed with one or several Default UI sets, and the user may add several additional Default or Customized and/or Personalized UI sets. Nevertheless at one moment one single UI set is actively used by the application to communicate with the user. This is called Active UI set.

### Summary of the invention

It is therefore one object of the present invention to provide an improved method, system and computer program product for supporting the dynamic switch of the User Interface language or customization of an Application running on Communications Device or Mobile Computing Device.

It is another object of the present invention to provide an improved method, system and computer program product for the automatic or user initiated switch of the User Interface.

The foregoing objects are achieved as described below.

User Interface elements (menus, texts, help files, graphical elements, sounds, voice prompts, gestures, etc.) are implemented in software components separate from the functional components containing all the functions which do not depend from the effective user of the Application. The Application may be then distributed, installed and used with one or several Default User Interface sets.

Users may download or access online additional Customized and/or Personalized User Interface sets from servers on the Internet or from Enterprise servers.

Once several Default or Customized and/or Personalized User Interface sets are locally available on their Communications Device or Mobile Computing Device or are available online on a virtual or physical server or a private or public cloud, the Users will be able to activate and use them in the Application or Applications for which the respective User Interface sets are intended for.

The present invention makes possible for the User to set, independently from the language of the Operating System, a list of known languages or dialects, and a preference order in which he/she wishes to practice these languages or dialects.

Applications will run with the User Interface of the language or dialect which is first on the practice list. The user has the possibility to set a timer, a gesture, a key-combination, a pointing device or screen action, which initiates the dynamical switch of the User Interface to the language next in the practice list, or if reached last in the preference list, to step back to the first language in the list.

As a result, the User will have the possibility to practice his/her language skills during the daily use of his/her Communications Device or Mobile Computing Device, and will have the possibility to anytime dynamically switch to a better understood language.

The above as well as additional objects, features and advantages of the present invention will become apparent in the following detailed written description.

### Brief Description of the drawings

The novel features believed characteristic of the invention are set forth in the appended claims. The invention itself however, as well as possible modes of use, further objects and advantages thereof, will best be understood by reference to the following detailed description of an illustrative embodiment when read in conjunction with the accompanying drawings, wherein:
**Fig. 1** depicts a block diagram of a Communications Device or a Mobile Computing Device on which an embodiment of the present invention may be implemented.
**Fig. 2** is a high level flowchart for processes of dynamic User Interface switching in accordance to the embodiment of the present invention.
**Fig. 3** depicts a diagram showing two states of the User Interface, first state is a User Interface example embodiment with language x, used before the switch, second state is the User Interface example embodiment with language y, after the switch.
**Fig. 4** depicts the different language settings which are possible in an embodiment of the current invention.
**Fig. 5a to 5d** are diagrams of result of switching of User Interface sets, with the switching function placed in various locations, in accordance to an embodiment of the present invention.

### Detailed description of the embodiments

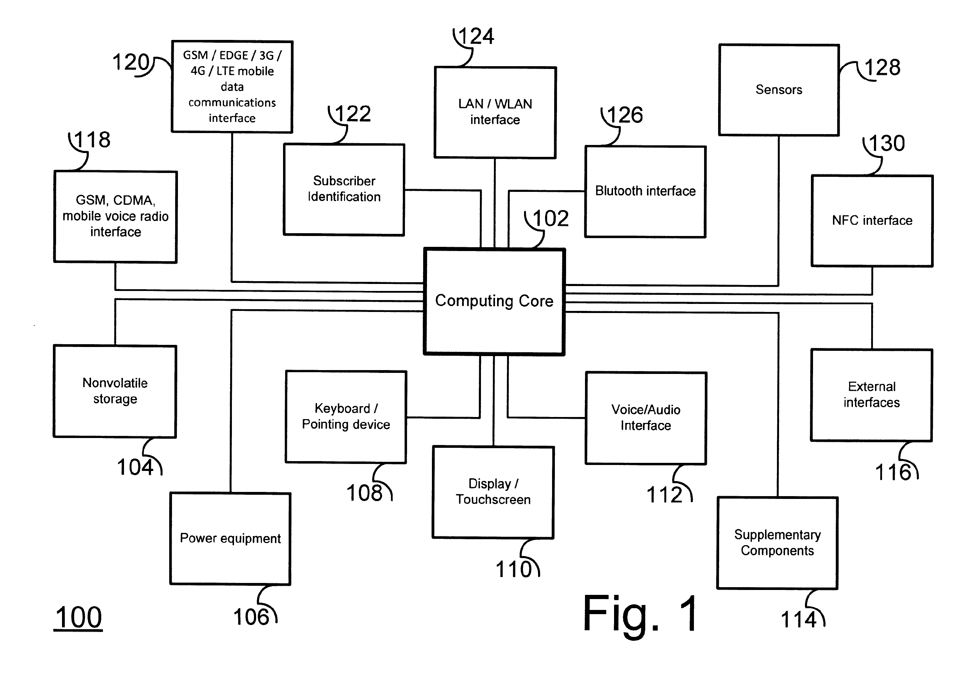

With reference now to the figures, and in particular with reference to **Fig. 1****,** a block diagram of a Communications or a Mobile Computing Device on which an embodiment of the present invention may be implemented is depicted. A Communications or Mobile Computing Device **100** may be a full or partial implementation of the block diagram depicted in **Fig. 1****.** The central part of the Communications or Mobile Computing Device is a Computing Core **102,** which provides all the computing elements, for example CPU, GPU, RAM, internal data and communications buses, chipsets, etc.

A Communications or a Mobile Computing Device includes several other elements connected to the central core. These are: non-volatile storage **104** (example: internal memory, SD card, etc.), power equipment **106** (example: battery, charging interface, solar panel, fuel cell, etc.), Keyboard/pointing device **108,** display/touchscreen **110,** voice/audio interfaces **112,** supplementary components **114** (example: front/rear camera, FM radio, TV receiver, infrared emitter/receiver), and external interfaces **116** (example: USB port, HDMI or other video output, vendor-specific connection ports, etc.). The other elements connected to the central core are radio interface for mobile voice **118** (example: GSM, CDMA, 3G, etc.), radio interface for mobile data connection **120** (example: GSM, EDGE, 3G, LTE, etc.), Subscriber Identification subsystem **122** (example: SIM card reader, integrated subscriber Id equipment, etc.), LAN/WLAN interface **124** (example: WiFi, Ethernet, etc.), Bluetooth interface **126,** sensors **128** (example: GPS, accelerometer, light, proximity, magnetic, thermic, pressure, orientation, humidity sensors, gyroscope, etc.), and NFC **130.**

Several of the above mentioned elements may or may not exist in the case of a specific Communications Device or Mobile Computing Device. Therefore the exemplary embodiment of a Communications or Mobile Computing Device shown in **Fig. 1** is provided solely for the purpose of explaining the invention and those skilled in the art will recognize that numerous variations are possible, both in form and function.

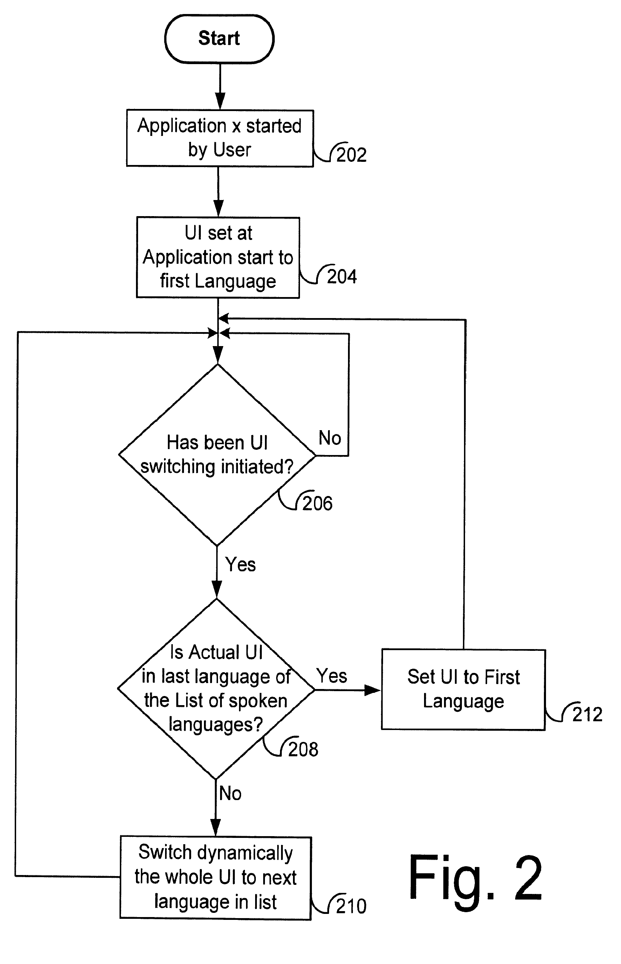

With reference now to **Fig. 2****,** a high level flowchart for a process of switching of User Interface sets in accordance with an embodiment of the present invention is depicted.

The process begins at step **202,** which illustrates the start of an Application by the User. The process next passes to step **204,** in which the User Interface of the Application is loaded with the language or customization which is in the first position of the list of practice preferences. The User will be able to use the Application with this language or customization.

The process in step **206** waits for switching of the UI to be initiated. The initiation may be done automatically by a timeout, or activated by the user, by a gesture, a key-combination, a pointing device or screen action. If the initiation has been activated, the process steps to step to **208,** where it checks whether the actual UI is the last language in the language preference list. If the actual UI is the last in the language preference list, the process in step **212** cycles back to its beginning by switching the User Interface to the first language or customization, than steps to **206,** waiting for next User Interface switch initiation.

If the actual User Interface is not the last in the language preference list, the User Interface will be dynamically changed in step **210** to the next language or customization in the preference list. After the User Interface has been dynamically changed, the process steps back to **206,** waiting for next User Interface switch initiation.

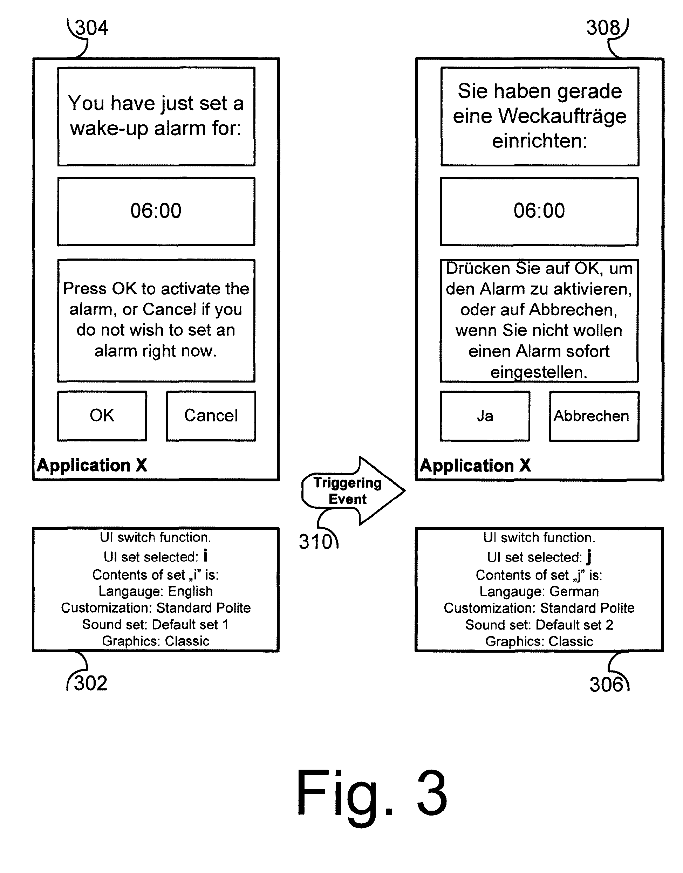

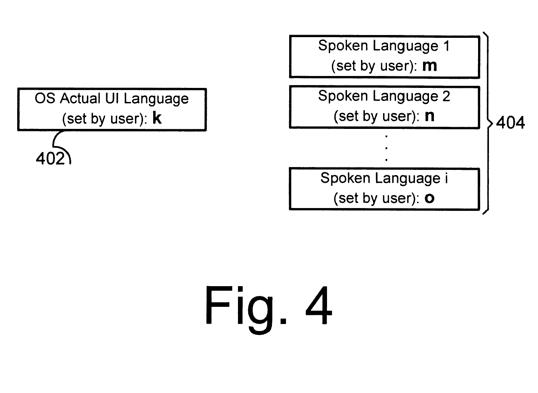

**Fig. 3** and **Fig. 4** represent further details of the present invention. **Fig. 4** shows the different language settings the User is able to configure. In one hand, it is possible to set the language of the Operating System OS **402,** as a general setting of the Operating System. This setting is independent from the embodiment of the present invention.

As part of an embodiment of the present invention, the User is able to set all the spoken languages, and as such generate a list of the other spoken languages **404,** in which the order of the languages represent the order in which the User wishes to make practice in these languages.

The User may put the OS language **402** as part of the preference list **404.** The preference list may also contain the User's mother tongue, which may be different from the OS language. OS language or mother tongue may be set in any position of the preference list.

**Fig. 3** depicts a possible example of an embodiment of the present invention, which represent the switch of the User Interface from one language to the next in the list.

User Interface of Application X is set to number **i** as active **302,** offering the User the possibility to use Application X with an English User Interface **304.**

When trigger event **310** occurs, it changes the active User Interface of Application X to the UI set **j,** which will become active **306.** The User Interface language of Application X will change to the next preferred language, in this particular example to German **308.**

The details of **Fig. 3** were provided exclusively as example, and those skilled in the art will recognize, that several language variations, and various implementation possibilities are possible.

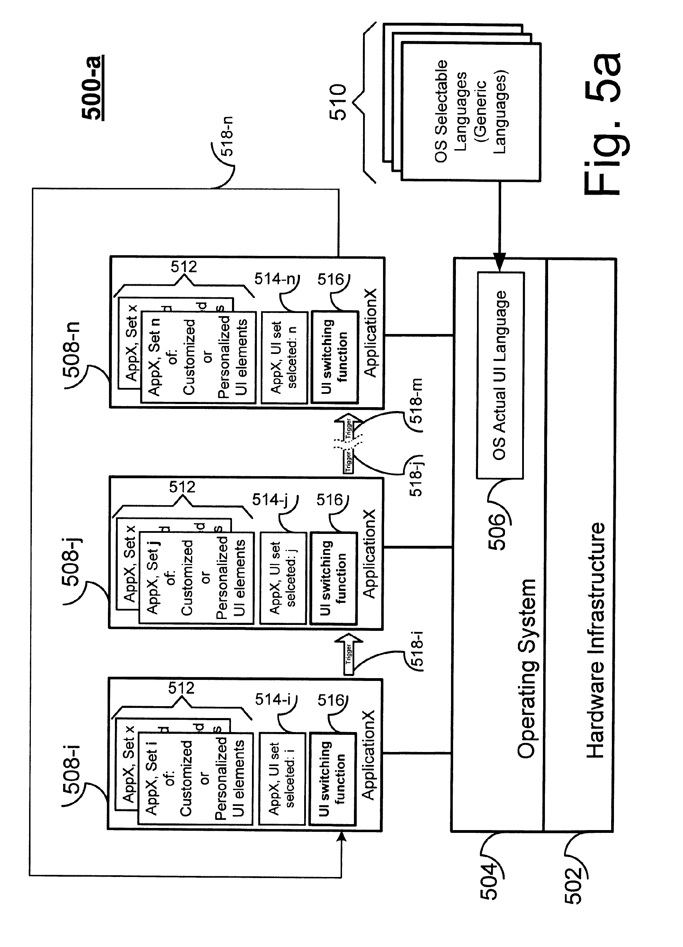

Referring to **Fig. 5a****,** it represents a diagram of result of User Interface switching initiated by a trigger **518** and executed by the Application-assigned UI switching function **516,** in accordance to an embodiment of the present invention. Those skilled in the art will recognize that numerous variations of assigning a function to an application are possible, both in form and function.

As it is known in the art, an Operating System **504** is running on the Hardware Infrastructure **502,** a representation of the Mobile Device **100** described on **Fig. 1****.** The Operating System offers to the User of the Mobile Device a set of Generic Languages **510.** User may choose from these, and set the OS Actual Language **506,** which selection determines the language of the User Interface of the Operating System itself, and the default settings of the Applications running on the Device.

A Mobile Application **508** runs on Operating System **504.** Application **508** typically include one or more User Interface sets (texts, menus, prompts, help texts, buttons, pictures, themes, sounds, voice prompts, gestures, etc.). These User Interface sets may be contained in the Application itself, in a different Application on the Mobile Device, in the OS of the Mobile Device, in a file or database placed anywhere in the Mobile Device, or anywhere on a public or private network, a public or private, virtual or physical server or a public or private cloud. Those skilled in the art will recognize that numerous variations of User Interface sets, and numerous possibilities to store and access them are possible, both in form and function.

Applications **508** contain its own set of Default UI sets and Customized and/or Personalized UI Sets, **512 (1 to x),** and for each such Application the User is allowed to set using the preferred UI set, **514-i (set i).** In **Fig. 5a** those skilled in the art will recognize, that each Mobile Application may run on a different language, with its own customization, with language settings being potentially different from each other, and different from the OS setting.

When a trigger event **518** occurs, the Application-assigned UI switching function will change the UI language or customization to the next on set in the preference list **404,** in accordance to the process detailed on **Fig. 2****.** As shown in the **Fig. 5a****,** Application X may start with the initial User Interface set **514-i.** When the trigger event **518-i** occurs, the Application-assigned UI switching function **516** sets the actual User Interface to the next one, **514-j,** which as such becomes the Active User Interface. When the trigger event **518-j** occurs, the UI set will be switched by the Application-assigned UI switching function **516** to the next in the preference list **404.** After several similar events, in a later step, when trigger event **518-m** occurs, the last UI set **514-n** in the preference list **404** will be activated by the Application-assigned UI switching function **516.** In this step, when a trigger event **518-n** occurs, the process steps to the first step, the Application-assigned switching function sets the first User Interface set **514-i** as Active, in accordance to the process described on **Fig. 2****.**

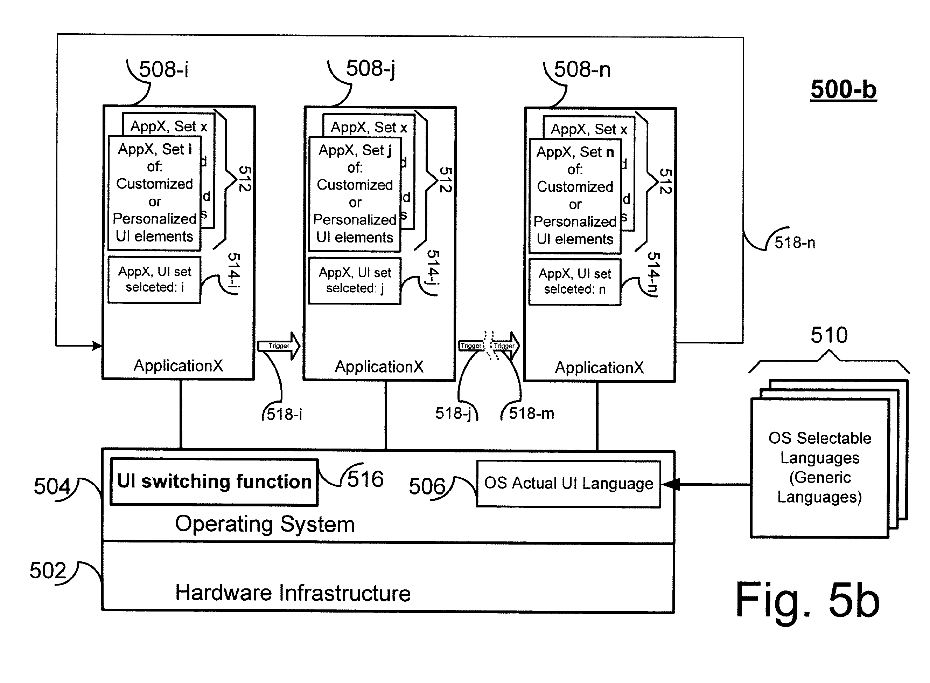

Referring to **Fig. 5b****,** it represents a diagram of result of User Interface switching initiated by a trigger **518** and executed by the UI switching function **516** assigned (embedded, linked, plugged-in, etc.) to the Operating System, in accordance to an embodiment of the present invention. Those skilled in the art will recognize that numerous variations of assigning a function to an Operating System are possible, both in form and function.

As it is known in the art, an Operating System **504** is running on the Hardware Infrastructure **502,** a representation of the Mobile Device **100** described on **Fig. 1****.** The Operating System offers to the User of the Mobile Device a set of Generic Languages **510.** User may choose from these, and set the OS Actual Language **506,** which selection determines the language of the User Interface of the Operating System itself, and the default settings of the Applications running on the Device.

A Mobile Application **508** runs on Operating System **504.** Application **508** typically include one or more User Interface sets (texts, menus, prompts, help texts, buttons, pictures, themes, sounds, voice prompts, gestures, etc.). These User Interface sets may be contained in the Application itself, in a different Application on the Mobile Device, in the OS of the Mobile Device, in a file or database placed anywhere in the Mobile Device, or anywhere on a public or private network, a public or private, virtual or physical server or a public or private cloud. Those skilled in the art will recognize that numerous variations of User Interface sets, and numerous possibilities to store and access them are possible, both in form and function.

Applications **508** contain its own set of Default UI sets and Customized and/or Personalized UI Sets, **512 (1 to x),** and for each such Application the User is allowed to set using the preferred UI set, **514-i (set i).** In **Fig. 5b** those skilled in the art will recognize, that each Mobile Application may run on a different language, with its own customization, with language settings being potentially different from each other, and different from the OS setting.

When a trigger event **518** occurs, the OS-assigned UI switching function will change the UI language or customization to the next on set in the preference list **404,** in accordance to the process detailed on **Fig. 2****.** As shown in the **Fig. 5b****,** Application **508** may start with the initial User Interface set **514-i.** When the trigger event **518-i** occurs, the OS-assigned UI switching function **516** sets the actual User Interface to the next one, **514-j,** which as such becomes the Active User Interface. When the trigger event **518-j** occurs, the UI set will be switched by the OS-assigned UI switching function **516** to the next in the preference list **404.** After several similar events, in a later step, when trigger event **518-m** occurs, the last UI set **514-n** in the preference list **404** will be activated by the OS-assigned UI switching function **516.** In this step, when a trigger event **518-n** occurs, the process steps to the first step, the OS-assigned switching function sets the first User Interface set **514-i** as Active, in accordance to the process described on **Fig. 2****.**

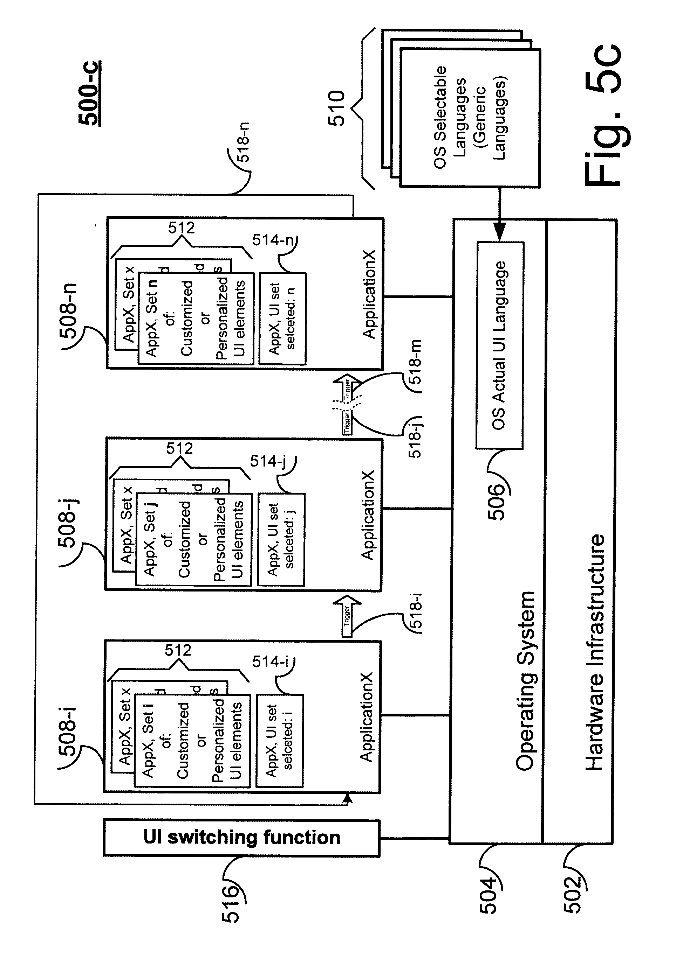

Referring to **Fig. 5c****,** it represents a diagram of result of User Interface switching initiated by a trigger **518** and executed by the UI switching function **516** realized as a separate Application, in accordance to an embodiment of the present invention. Those skilled in the art will recognize that numerous variations of realizing a function in an independent Application are possible, both in form and function.

As it is known in the art, an Operating System **504** is running on the Hardware Infrastructure **502,** a representation of the Mobile Device **100** described on **Fig. 1****.** The Operating System offers to the User of the Mobile Device a set of Generic Languages **510.** User may choose from these, and set the OS Actual Language **506,** which selection determines the language of the User Interface of the Operating System itself, and the default settings of the Applications running on the Device.

A Mobile Application **508** runs on Operating System **504.** Application **508** typically include one or more User Interface sets (texts, menus, prompts, help texts, buttons, pictures, themes, sounds, voice prompts, gestures, etc.). These User Interface sets may be contained in the Application itself, in a different Application on the Mobile Device, in the OS of the Mobile Device, in a file or database placed anywhere in the Mobile Device, or anywhere on a public or private network, a public or private, virtual or physical server or a public or private cloud. Those skilled in the art will recognize that numerous variations of User Interface sets, and numerous possibilities to store and access them are possible, both in form and function.

Applications **508** contain its own set of Default UI sets and Customized and/or Personalized UI Sets, **512 (1 to x),** and for each such Application the User is allowed to set using the preferred UI set, **514-i (set i).** In **Fig. 5b** those skilled in the art will recognize, that each Mobile Application may run on a different language, with its own customization, with language settings being potentially different from each other, and different from the OS setting.

When a trigger event **518** occurs, the UI switching function **516** realized as a separate Application will change the UI language or customization to the next on set in the preference list **404,** in accordance to the process detailed on **Fig. 2****.** As shown in the **Fig. 5c****,** Application **508** may start with the initial User Interface set **514-i.** When the trigger event **518-i** occurs, the UI switching function **516** realized as a separate Application sets the actual User Interface to the next one, **514-j,** which as such becomes the Active User Interface. When the trigger event **518-j** occurs, the UI set will be switched by UI switching function **516** realized as a separate Application to the next in the preference list **404.** After several similar events, in a later step, when trigger event **518-m** occurs, the last UI set **514-n** in the preference list **404** will be activated by the UI switching function **516** realized as a separate Application. In this step, when a trigger event **518-n** occurs, the process steps to the first step, the UI switching function **516** realized as a separate Application sets the first User Interface set **514-i** as Active, in accordance to the process described on **Fig. 2****.**

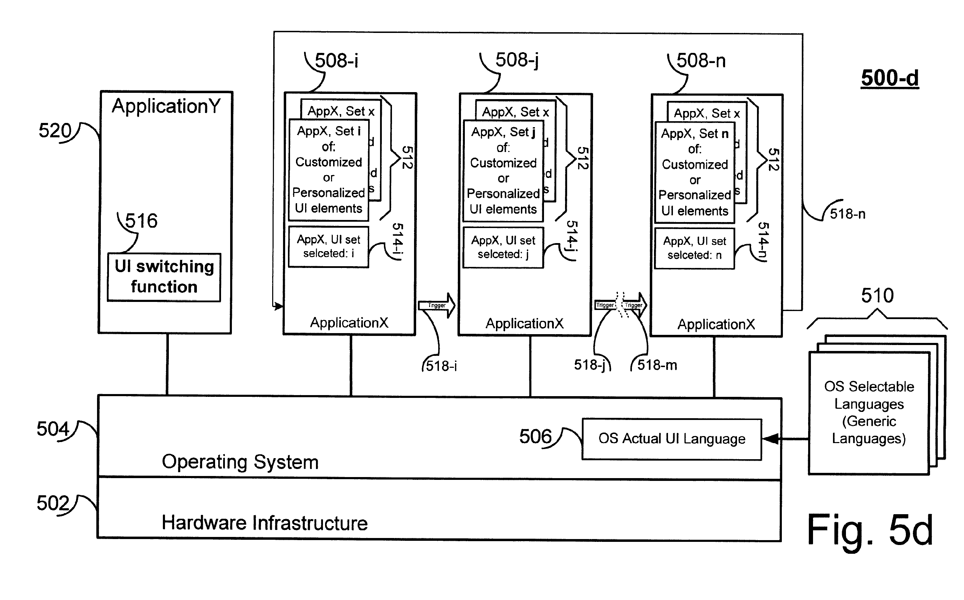

Referring now to **Fig. 5d****,** it represents a diagram of result of User Interface switching initiated by a trigger **518** and executed by the UI switching function **516,** assigned to a different Application **520,** in accordance to an embodiment of the present invention. Those skilled in the art will recognize that numerous variations of assigning a function to a different application than the actively used one are possible, both in form and function.

As it is known in the art, an Operating System **504** is running on the Hardware Infrastructure **502,** a representation of the Mobile Device **100** described on **Fig. 1****.** The Operating System offers to the User of the Mobile Device a set of Generic Languages **510.** User may choose from these, and set the OS Actual Language **506,** which selection determines the language of the User Interface of the Operating System itself, and the default settings of the Applications running on the Device.

A Mobile Application **508** runs on Operating System **504.** Application **508** typically include one or more User Interface sets (texts, menus, prompts, help texts, buttons, pictures, themes, sounds, voice prompts, gestures, etc.). These User Interface sets may be contained in the Application itself, in a different Application on the Mobile Device, in the OS of the Mobile Device, in a file or database placed anywhere in the Mobile Device, or anywhere on a public or private network, a public or private, virtual or physical server or a public or private cloud. Those skilled in the art will recognize that numerous variations of User Interface sets, and numerous possibilities to store and access them are possible, both in form and function.

Applications **508** contain its own set of Default UI sets and Customized and/or Personalized UI Sets, **512 (1 to x),** and for each such Application the User is allowed to set using the preferred UI set, **514-i (set i).** In **Fig. 5d** those skilled in the art will recognize, that each Mobile Application may run on a different language, with its own customization, with language settings being potentially different from each other, and different from the OS setting.

When a trigger event **518** occurs, the UI switching function **516** assigned to a different Application **520,** will change the UI language or customization to the next on set in the preference list **404,** in accordance to the process detailed on **Fig. 2****.** As shown in the **Fig. 5d****,** Application X may start with the initial User Interface set **514-i.** When the trigger event **518-i** occurs, the UI switching function **516** assigned to a different Application **520** sets the actual User Interface to the next one, **514-j,** which as such becomes the Active User Interface. When the trigger event **518-j** occurs, the UI set will be switched by the UI switching function **516** assigned to a different Application **520,** to the next in the preference list **404.** After several similar events, in a later step, when trigger event **518-m** occurs, the last UI set **514-n** in the preference list **404** will be activated by the UI switching function **516** assigned to a different Application **520.** In this step, when a trigger event **518-n** occurs, the process steps to the first step, the UI switching function **516** assigned to a different Application **520,** sets the first User Interface set **514-i** as Active, in accordance to the process described on **Fig. 2****.**

Those skilled in the art will recognize that numerous variations of application types, like native applications, web-based applications, and several others may be implemented, and numerous ways to store and access their User Interfaces from local or from remote location are possible, both in form and function.

## Claims

1. A method of dynamically changing the Language, Customization and/or Personalization of the User Interface of Application running on a Communications Devices or Mobile Computing Devices, comprising:
setting a preference list of languages or customizations in which the user wishes to make practice,
dynamically switching the User Interface to the next language or customization in the preference list, initiated by a timeout or by the user by a gesture, a key-combination, a pointing device or screen action,
dynamically accessing the User Interface sets stored locally or remote.

2. A system of dynamically changing the Language, Customization and/or Personalization of the User Interface of Application running on a Communications Devices or Mobile Computing Devices, preferably for performing the method of Claim **1,** comprising:
means for setting a preference list of languages or customizations in which the user wishes to make practice,
means for dynamically switching the User Interface to the next language or customization in the preference list, initiated by a timeout or by the user by a gesture, a key-combination, a pointing device or a screen action,
means for dynamically accessing the User Interface sets stored locally or remote.

3. A set of computer program products within: a Computer usable medium, a Communications Device usable medium or a Mobile Computing Device usable medium, dynamically changing the Language, Customization and/or Personalization of the User Interface of Application running on a Communications Devices or Mobile Computing Devices, preferably for performing the method of Claim **1,** comprising:
instructions for setting preference a list of languages or customizations in which the user wishes to make practice,
instructions for dynamically switching the User Interface to the next language or customization in the preference list, initiated by a timeout or by the user by a gesture, a key-combination, a pointing device or a screen action,
instructions for dynamically accessing the User Interface sets stored locally or remote.
